# EUROPÄISCHE PATENTSCHRIFT

(11) **EP 3 016 838 B1**
(45) Veröffentlichungstag und Bekanntmachung des Hinweises auf die Patenterteilung: **19.12.2018**
(21) Anmeldenummer: 14734822.1
(22) Anmeldetag: 02.07.2014
(51) Int. Cl.: B62D 25/20, B62D 21/03, B62D 25/02, B62D 29/00

(54) **FAHRZEUGKAROSSERIE**
VEHICLE BODY
CARROSSERIE DE VÉHICULE

(30) Priorität: 04.07.2013 DE 102013213112
(43) Veröffentlichungstag der Anmeldung: 11.05.2016
(73) Patentinhaber: Bayerische Motoren Werke Aktiengesellschaft, 80809 München (DE)
(72) Erfinder: HOGGER, Thomas, 83624 Otterfing (DE); DANNE, Anja, 80937 München (DE); DIRSCHMID, Ferdinand, 85521 Ottobrunn (DE); GOLDYN, Lukasz, 80807 München (DE); GONDA, Mihaly, 85716 Unterschleißheim (DE); REISBÖCK, Marco, 80686 München (DE); ULLRICH, Sabine, 82110 Germering (DE); WEISS, Thomas, 82340 Feldafing (DE)
(86) Internationale Anmeldenummer: PCT/EP2014/064096
(87) Internationale Veröffentlichungsnummer: WO 2015/000977

(56) Entgegenhaltungen:
- EP-A1- 1 762 466
- EP-A1- 2 019 027
- DE-A1-102006 055 560
- GB-A- 2 280 647
- KR-B1- 0 142 927

## Beschreibung

Vorliegende Erfindung betrifft eine Fahrzeugkarosserie sowie ein Fahrzeug, umfassend die Fahrzeugkarosserie. Insbesondere wird die beschriebene Fahrzeugkarosserie für ein Kraftfahrzeug mit vier Rädern verwendet.

Bei der Konstruktion einer Fahrzeugkarosserie müssen unterschiedliche Crash-Fälle berücksichtigt werden. Beim Seiten-Crash ist es wichtig, dass die Karosserie relativ steif reagiert, so dass die meiste Energie im Stoßfängersystem des Crash-Gegners abgebaut wird.

Aus der EP 1 762 466 A1 ist ein Kraftfahrzeug mit seitlichen Schweller bekannt, umfassend:
- zwei sich in Fahrzeuglängsrichtung erstreckende Schweller,
- zumindest einen Träger, der sich in Fahrzeugquerrichtung zwischen den beiden Schwellern erstreckt, wobei der Träger höher als ein Bodenblech der Fahrzeugkarosserie angeordnet ist, und
- zumindest ein die Fahrzeugkarosserie versteifendes Schaumformteil, das in einer Seitenstruktur der Fahrzeugkarosserie auf Höhe des Trägers angeordnet ist, wobei zusätzlich zum Schaumformteil ein Anteil des Trägers mit einem ausgehärteten Schaum ausgefüllt ist, wobei
- zumindest einer der Schweller mehrere Profile umfasst.

Außerdem ist aus der DE 10 2006 055 560 A1 ein Kraftfahrzeug mit einem als Hohlprofil ausgebildeten Karosseriebauteil bekannt. Der Hohlraum ist zumindest teilweise mit einem Dämpfungsschaum zur akustischen Dämpfung ausgefüllt. Das Karosseriebauteil ist beispielsweise ein Schweller.

Ferner ist aus der KR 0 142 927 B1 ein Kraftfahrzeug mit einem seitlichen Schweller bekannt, dessen Hohlraum mit einem Schaummaterial gefüllt ist.

Es ist Aufgabe vorliegender Erfindung, eine Fahrzeugkarosserie anzugeben, die bei kostengünstiger Herstellung sowohl leichtbauend ist als auch stabil genug ist, insbesondere für den Seiten-Crash mit einem Crash-Gegner mit einem relativ hohen Stoßfänger.

Die Lösung der Aufgabe erfolgt durch die Merkmale der Ansprüche 1 oder 2.

Die abhängigen Ansprüche haben bevorzugte Weiterbildungen der Erfindung zum Gegenstand.

Somit wird die Erfindung gelöst durch eine Fahrzeugkarosserie, umfassend zwei sich in Fahrzeuglängsrichtung erstreckende Schweller und zumindest einen Träger. Der Träger erstreckt sich zwischen den beiden Schwellern in Fahrzeugquerrichtung und somit im Wesentlichen parallel zur Horizontalen. Die Fahrzeugkarosserie wird insbesondere für Kraftfahrzeuge mit vier Rädern verwendet. Erfindungsgemäß ist zumindest ein die Fahrzeugkarosserie versteifendes Schaumformteil aus hartem Schaum vorgesehen, das in einer Seitenstruktur der Fahrzeugkarosserie auf Höhe des Trägers angeordnet ist. Insbesondere befindet sich auf beiden Fahrzeugseiten zumindest eines dieser Schaumformteile.

Durch das zumindest eine Schaumformteil wird die Fahrzeugkarosserie in Fahrzeugquerrichtung versteift. Dadurch wird erreicht, dass beim Seiten-Crash die meiste Energie im Crash-Gegner abgebaut wird. Die Verwendung von Schaum ermöglicht eine sehr flexible Konstruktion, da für annähernd alle Hohlräume ein entsprechendes Schaumformteil hergestellt werden kann. Gleichzeitig ist der Schaum relativ leichtbauend, so dass ohne signifikante Gewichtssteigerungen die Steifigkeit der Karosserie erhöht werden kann. Erfindungsgemäß ist gemäß Anspruch 1 vorgesehen, dass zusätzlich zum Schaumformteil ein Anteil des Schwellers und ein Anteil des Trägers mit einem ausgehärteten Schaum ausgefüllt sind. Der gesamte Träger ist höher angeordnet als das Bodenblech der Fahrzeugkarosserie. Weiter erfindungsgemäß verläuft der Träger unter einer Rücksitzbank. Crash-Gegner mit einem relativ hohen Stoßfänger, wie beispielsweise kleine Lastkraftwägen oder Pickups, treffen die Fahrzeugkarosserie beim Seiten-Crash wesentlich über dem Bodenblech. Deshalb ist vorgesehen, dass der zumindest teilweise mit Schaum gefüllte Träger über dem Bodenblech angeordnet ist, so dass der Kraftpfad möglichst senkrecht vom Crash-Gegner in den Träger verläuft.

In Fahrzeuglängsrichtung gesehen hinter dem Träger befindet sich eine Mulde zur Aufnahme der Rücksitzbank.

Erfindungsgemäß fluchten, in Fahrzeugquerrichtung betrachtet, die Anteile mit Schaum und das Schaumformteil. Dadurch entsteht ein Kraftpfad durch das Schaumformteil, den Schaum im Schweller und den Schaum im Träger.

Ferner ist erfindungsgemäß gemäß Anspruch 2 vorgesehen, dass zumindest einer der Schweller mehrere Profile umfasst, wobei die Profile auf Höhe des Trägers zumindest teilweise mit ausgehärtetem Schaum gefüllt sind. In den Schweller wird hierzu insbesondere der Schaum eingespritzt oder eingegossen und anschließend ausgehärtet. Ein Bereich des jeweiligen Schwellers fluchtet in Fahrzeugquerrichtung mit dem Träger. Eben dieser Bereich wird bevorzugt mit Schaum gefüllt, so dass bei einem Seiten-Crash der Kraftpfad durch den schaumgefüllten Bereich im Schweller direkt in den Trägers führt. Insbesondere ist der Schweller rohrförmig ausgebildet. Unter dem Begriff "rohrförmig" sind Karosseriestrukturen mit unterschiedlichsten Querschnitten zu verstehen, die sowohl einteilig auch als mehrschalig aufgebaut sein können. Der gesamte Träger ist höher angeordnet, als das Bodenblech der Fahrzeugkarosserie. Weiter erfindungsgemäß verläuft der Träger unter einer Rücksitzbank. Crash-Gegner mit einem relativ hohen Stoßfänger, wie beispielsweise kleine Lastkraftwägen oder Pickups, treffen die Fahrzeugkarosserie beim Seiten-Crash wesentlich über dem Bodenblech. Deshalb ist vorgesehen, dass der zumindest teilweise mit Schaum gefüllte Träger über dem Bodenblech angeordnet ist, so dass der Kraftpfad möglichst senkrecht vom Crash-Gegner in den Träger verläuft. In Fahrzeuglängsrichtung gesehen hinter dem Träger befindet sich eine Mulde zur Aufnahme der Rücksitzbank.

Insbesondere ist vorgesehen, dass der Träger das sog. "Fersenblech" der Fahrzeugkarosserie ist. Dieses Fersenblech ist ein Träger, der in Fahrzeugquerrichtung wesentlich höher als das Bodenblech verläuft. Gemäß den üblichen Fachausdrücken wird der Begriff "Fersenblech" verwendet. Allerdings ist im Rahmen der Erfindung vorgesehen, das Fersenblech sowohl aus einem Metall, beispielsweise in Schalenbauweise, als auch aus faserverstärktem Kunststoff zu fertigen.

Zusätzlich ist vorgesehen, dass der Träger ein Profil ausbildet, und insbesondere rohrförmig ausgestaltet ist. Der Träger ist zumindest teilweise mit einem ausgehärteten Schaum gefüllt. Durch diesen Schaum wird der Träger versteift. Der so versteifte Träger ermöglicht eine sehr steife Fahrzeugkarosserie in Fahrzeugquerrichtung.

Bevorzugt ist vorgesehen, dass das zumindest eine Schaumformteil in einer Tür der Fahrzeugkarosserie angeordnet ist.

Es ist durchaus möglich, auf einer Fahrzeugseite auch mehrere der Schaumformteile an verschiedenen Positionen anzuordnen.

Die Verwendung von Schaum im Träger und/oder in den Schwellern ermöglicht eine sehr flexible Konstruktion, da in annähernd alle Hohlräume Schaum eingespritzt werden kann.

Somit gibt es bevorzugt auf beiden Seiten des Fahrzeugs jeweils zwei mit Schaum gefüllte Bereiche und ein Schaumformteil. Das Schaumformteil, der mit Schaum gefüllte Bereich des Schwellers und der mit Schaum gefüllte Bereich des Trägers fluchten bei einer Betrachtung in Fahrzeugquerrichtung. Dadurch ist ein durchgehender Kraftpfad von dem Schaumformteil über den Schweller in den Träger möglich.

Die beiden stirnseitigen Enden des Trägers liegen jeweils bevorzugt an einer Innenseite des Schwellers an, so dass hier keine Freiräume entstehen, die beim Seiten-Crash deformiert werden könnten.

Des Weiteren ist bevorzugt vorgesehen, dass der Schaum im Träger bis zu den stirnseitigen Enden des Trägers reicht. Dadurch ist der sich direkt an den Schweller anschließende Bereich des Trägers mit Schaum gefüllt. Im mittleren Bereich des Fahrzeugs ist es möglich, dass der Träger nicht mit Schaum gefüllt ist.

So ist bevorzugt vorgesehen, dass der zumindest eine Träger, also insbesondere das Fersenblech, und/oder die Schweller aus faserverstärktem Kunststoff oder in Blechschalenbauweise gefertigt sind. Dabei ist auch vorgesehen, dass manche Teile der Fahrzeugkarosserie in Blechschalenbauweise und andere Bestandteile aus faserverstärktem Kunststoff gefertigt sind. Als faserverstärktem Kunststoff kommt insbesondere glasfaserverstärkter Kunststoff oder kohlefaserverstärkter Kunststoff zur Anwendung.

Der Schaum im Träger und/oder im Schweller und/oder das Schaumformteil werden vorzugsweise aus expandiertem Polypropylen (EPP) oder Polyurethan (PU) gefertigt. Dabei ist auch vorgesehen, dass die Schaumfüllung im Träger oder im Schweller oder das Schaumformteil aus unterschiedlichen Materialien bestehen.

Die Erfindung umfasst des Weiteren ein Fahrzeug mit einer der soeben beschriebenen Fahrzeugkarosserien. Die im Rahmen der Fahrzeugkarosserie beschriebenen Unteransprüche und vorteilhaften Ausgestaltungen finden entsprechend vorteilhafte Anwendung für das Fahrzeug.

Weitere Einzelheiten, Merkmale und Vorteile der Erfindung ergeben sich aus der nachfolgenden Beschreibung und den Figuren. Es zeigen:
- Figur 1: eine geschnittene Seitenansicht einer erfindungsgemäßen Fahrzeugkarosserie gemäß einem Ausführungsbeispiel;
- Figur 2: eine schematisch vereinfachte geschnittene Seitenansicht der erfindungsgemäßen Fahrzeugkarosserie gemäß dem Ausführungsbeispiel;
- Figur 3: den in Figur 2 gekennzeichneten Schnitt A-A; und
- Figur 4: eine geschnittene Draufsicht auf die erfindungsgemäße Fahrzeugkarosserie gemäß dem Ausführungsbeispiel.

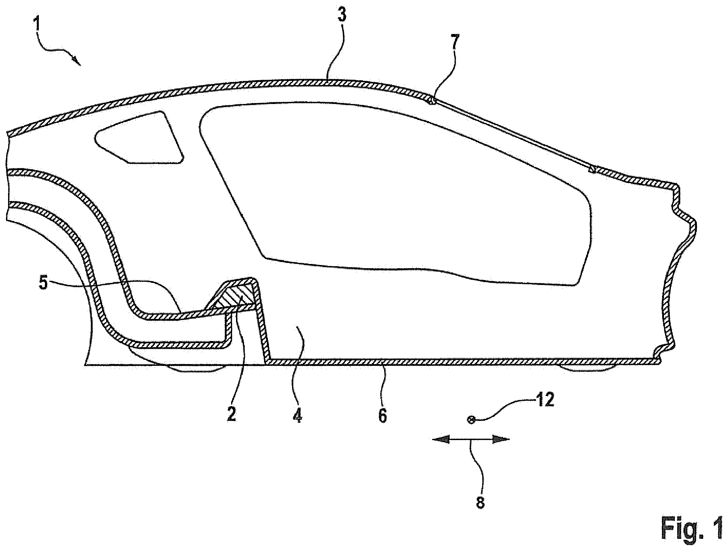

Nachfolgend wird anhand der Figuren 1 bis 4 ein Ausführungsbeispiel einer Fahrzeugkarosserie 1 beschrieben.

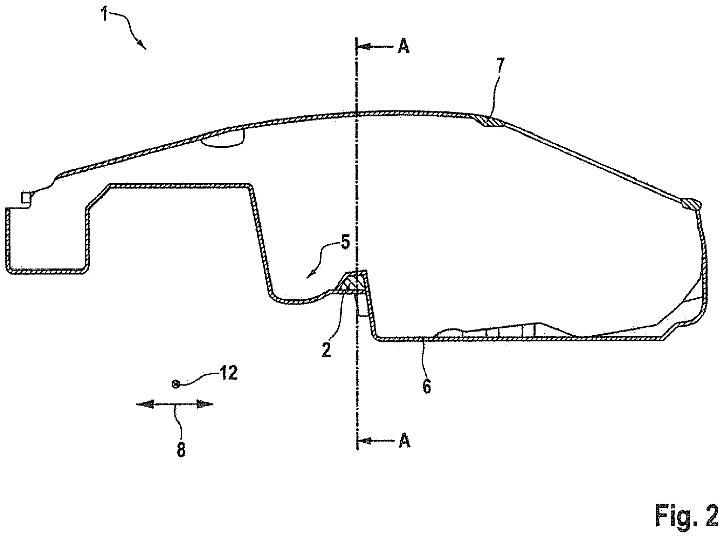

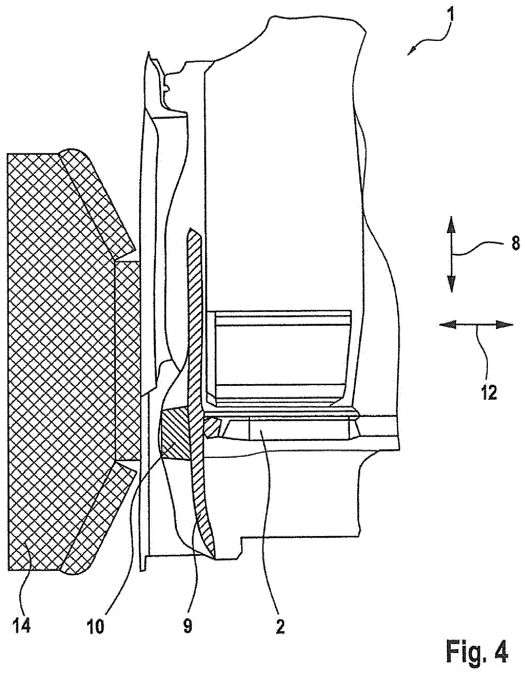

Figur 1 zeigt eine geschnittene Seitenansicht der Fahrzeugkarosserie 1. In Figur 2 ist die Schnittansicht schematisch vereinfacht dargestellt. Es ist eine Fahrzeuglängsrichtung 8 definiert. Die Fahrzeuglängsrichtung 8 entspricht der Fahrtrichtung eines zugehörigen Fahrzeugs. Senkrecht zur Fahrzeuglängsrichtung 8 erstreckt sich eine Fahrzeugquerrichtung 12 (s. Figur 4).

Die Fahrzeugkarosserie 1 umfasst einen Träger 2, der sich in Fahrzeugquerrichtung 12 erstreckt. Des Weiteren sind Dachrahmen 3, Frontscheibenrahmen 7 und Seitenrahmen 4 vorgesehen. In Fahrzeuglängsrichtung 8 gesehen hinter dem Träger 2 befindet sich eine Mulde 5 zur Aufnahme einer Rücksitzbank. Den unteren Abschluss der Fahrzeugkarosserie 1 bildet ein Bodenblech 6.

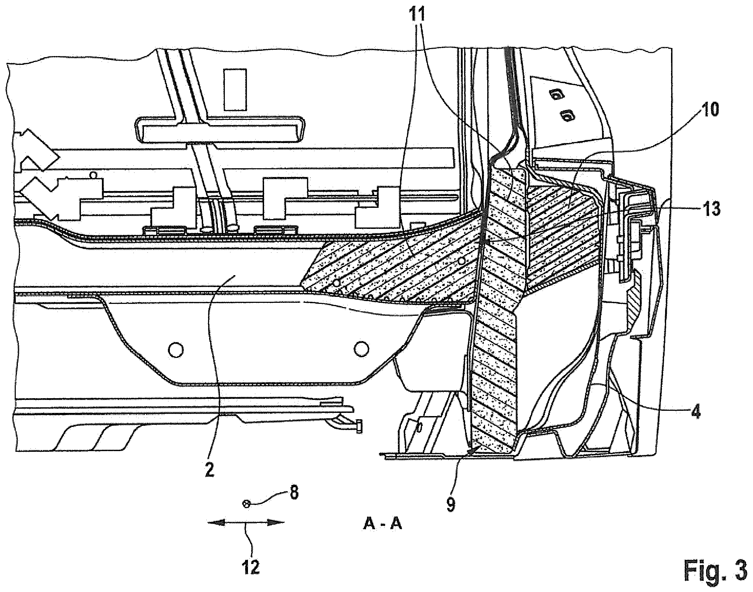

In Figur 2 ist ein Schnitt A-A gekennzeichnet. Die entsprechende Schnittdarstellung findet sich in Figur 3. Figur 3 zeigt als weitere Bestandteile der Fahrzeugkarosserie 1 einen Schweller 9. Es versteht sich, dass auf beiden Seiten der Fahrzeugkarosserie 1 jeweils ein Schweller 9 verläuft. Seitlich außerhalb des jeweiligen Schwellers ist ein Schaumformteil 10 in der Fahrzeugkarosserie 1 angeordnet. Das Schaumformteil 10 befindet sich in dem Freiraum zwischen der Außenseite des jeweiligen Schwellers 9 und dem Seitenrahmen 4 der Fahrzeugkarosserie 1.

Des Weiteren zeigt der Schnitt A-A in Figur 3, dass die stirnseitigen Enden 13 des Trägers 2 an der Innenseite des jeweiligen Schwellers 9 anliegen.

Der Träger 2 ist das sog. "Fersenblech" in der Fahrzeugkarosserie 1. Dieses Fersenblech befindet sich weit oberhalb des Bodenblechs 6. Etwa auf Höhe des als Fersenblech ausgebildeten Trägers 2 trifft der in Figur 4 dargestellte Crash-Gegner 14 beim Seiten-Crash die Fahrzeugkarosserie 1. Hierbei handelt es sich insbesondere um einen Crash-Gegner 14 mit relativ hohem Stoßfängersystem. Eben bei diesem Crash-Fall ist es wünschenswert, dass die Fahrzeugkarosserie 1 möglichst wenig deformiert wird und die Crash-Energie im Crash-Gegner 14 abgebaut wird. Deshalb ist erfindungsgemäß vorgesehen, dass zusätzlich zum Schaumformteil 10, ein Anteil des Schwellers 9 und ein Anteil des Trägers 2 mit einem ausgehärteten Schaum 11 ausgefüllt sind. Wie insbesondere Figur 3 zeigt, fluchten, in Fahrzeugquerrichtung 12 betrachtet, die Anteile mit Schaum 11 und das Schaumformteil 10. Dadurch entsteht ein Kraftpfad durch das Schaumformteil 10, den Schaum 11 im Schweller 9 und den Schaum 11 im Träger 2.

Die Schäume 11 und das Schaumformteil 10 werden vorzugsweise aus PU-Schaum oder EPP-Schaum gefertigt. Für die verschiedenen Bestandteile der Fahrzeugkarosserie 1 wird entweder die Blechschalenbauweise oder ein faserverstärkter Kunststoff gewählt. Durch die Versteifung des Trägers 2 und des Schwellers 9 mit dem Schaum 11, kann hier sehr gut faserverstärkter Kunststoff verwendet werden, da es aufgrund der steifen Ausgestaltung nicht zu einem Brechen der faserverstärkten Kunststoffanteile kommt.

### Bezugszeichenliste

- 1: Fahrzeugkarosserie
- 2: Träger (Fersenblech)
- 3: Dachrahmen
- 4: Seitenrahmen
- 5: Mulde für Rücksitzbank
- 6: Bodenblech
- 7: Frontscheibenrahmen
- 8: Fahrzeuglängsrichtung
- 9: Schweller
- 10: Schaumformteil
- 11: ausgehärteter Schaum
- 12: Fahrzeugquerrichtung
- 13: stirnseitige Enden
- 14: Crash-Gegner

## Patentansprüche

1. Fahrzeugkarosserie (1), vorzugsweise für ein Kraftfahrzeug, umfassend
- zwei sich in Fahrzeuglängsrichtung (8) erstreckende Schweller (9),
- zumindest einen Träger (2), der sich in Fahrzeugquerrichtung (12) zwischen den beiden Schwellern (9) erstreckt, wobei der gesamte Träger (2) höher als ein Bodenblech (6) der Fahrzeugkarosserie (1) angeordnet ist und unter einer Rücksitzbank verläuft, wobei sich in Fahrzeuglängsrichtung (8) gesehen hinter dem Träger (2) eine Mulde (5) zur Aufnahme der Rücksitzbank befindet, und
- zumindest ein die Fahrzeugkarosserie (1) versteifendes Schaumformteil (10), das in einer Seitenstruktur der Fahrzeugkarosserie (1) auf Höhe des Trägers (2) angeordnet ist,
wobei zusätzlich zum Schaumformteil (10) ein Anteil des Schwellers (9) und ein Anteil des Trägers (2) mit einem ausgehärteten Schaum (11) ausgefüllt sind, wobei in Fahrzeugquerrichtung (12) betrachtet, die Anteile mit Schaum (11) und das Schaumformteil (10) fluchten.

2. Fahrzeugkarosserie (1), vorzugsweise für ein Kraftfahrzeug, umfassend
- zwei sich in Fahrzeuglängsrichtung (8) erstreckende Schweller (9),
- zumindest einen Träger (2), der sich in Fahrzeugquerrichtung (12) zwischen den beiden Schwellern (9) erstreckt, wobei der gesamte Träger (2) höher als ein Bodenblech (6) der Fahrzeugkarosserie (1) angeordnet ist, und unter einer Rücksitzbank verläuft, wobei sich in Fahrzeuglängsrichtung (8) gesehen hinter dem Träger (2) eine Mulde (5) zur Aufnahme der Rücksitzbank befindet, und
- zumindest ein die Fahrzeugkarosserie (1) versteifendes Schaumformteil (10), das in einer Seitenstruktur der Fahrzeugkarosserie (1) auf Höhe des Trägers (2) angeordnet ist,
wobei zumindest einer der Schweller (9) mehrere Profile umfasst, wobei die Profile auf Höhe des Trägers (2) zumindest teilweise mit ausgehärtetem Schaum (11) gefüllt sind und der Träger (2) ein Profil ausbildet und zumindest teilweise mit gehärtetem Schaum (11) gefüllt ist.

3. Fahrzeugkarosserie nach einem der vorhergehenden Ansprüche, **dadurch gekennzeichnet, dass** der Träger (2) als Fersenblech ausgebildet ist.

4. Fahrzeugkarosserie nach einem der vorhergehenden Ansprüche, **dadurch gekennzeichnet, dass** das zumindest eine Schaumformteil (10) in einer Tür der Fahrzeugkarosserie (1) angeordnet ist.

5. Fahrzeugkarosserie nach einem der vorhergehenden Ansprüche, **dadurch gekennzeichnet, dass** die beiden stirnseitigen Enden (13) des Trägers (2) jeweils an einer Innenseite des jeweiligen Schwellers (9) anliegen.

6. Fahrzeugkarosserie nach Anspruch 5, **dadurch gekennzeichnet, dass** der Schaum (11) im Träger (2) bis zu den stirnseitigen Enden (13) reicht.

7. Fahrzeugkarosserie nach einem der vorhergehenden Ansprüche, **dadurch gekennzeichnet, dass** der zumindest eine Träger (2) und/oder die Schweller (9) aus faserverstärktem Kunststoff oder in Blechschalenbauweise gefertigt sind.

8. Fahrzeugkarosserie nach einem der vorhergehenden Ansprüche, **dadurch gekennzeichnet, dass** der Schaum (11) und/oder das Schaumformteil (10) aus expandiertem Polypropylen (EPP) oder aus Polyurethan (PU) gefertigt ist.

9. Fahrzeug mit einer Fahrzeugkarosserie (1) nach einem der vorhergehenden Ansprüche.

## Claims

1. A vehicle body (1), preferably for a motor vehicle, comprising
- two sills (9) extending in the vehicle longitudinal direction (8),
- at least one support (2), which extends between the two sills (9) in the vehicle transverse direction (12), wherein the entire support (2) is arranged higher than a floor panel (6) of the vehicle body (1) and extends under a rear seat bench, wherein a cavity (5) for receiving the rear seat bench is located behind the support (2) when viewed in the vehicle longitudinal direction (8), and
- at least one moulded foam part (10) to reinforce the vehicle body (1), which part is arranged in a side structure of the vehicle body (1) at the level of the support (2),
wherein, in addition to the moulded foam part (10), a portion of the sill (9) and a portion of the support (2) are filled with a hardened foam (11), wherein the portions comprising foam (11) and the moulded foam part (10) are in alignment when viewed in the vehicle transverse direction (12).

2. A vehicle body (1), preferably for a motor vehicle, comprising
- two sills (9) extending in the vehicle longitudinal direction (8),
- at least one support (2), which extends between the two sills (9) in the vehicle transverse direction (12), wherein the entire support (2) is arranged higher than a floor panel (6) of the vehicle body (1) and extends under a rear seat bench, wherein a cavity (5) for receiving the rear seat bench is located behind the support (2) when viewed in the vehicle longitudinal direction (8),and
- at least one moulded foam part (10) to reinforce the vehicle body (1), which part is arranged in a side structure of the vehicle body (1) at the level of the support (2),
wherein at least one of the sills (9) comprises a plurality of profiles, wherein the profiles at the level of the support (2) are filled with hardened foam (11) at least in part, and the support (2) forms a profile and is filled with hardened foam (11) at least in part.

3. A vehicle body according to any of the preceding claims, **characterised in that** the support (2) is in the form of a heel plate.

4. A vehicle body according to any of the preceding claims, **characterised in that** the at least one moulded foam part (10) is arranged in a door of the vehicle body (1).

5. A vehicle body according to any of the preceding claims, **characterised in that** the two front ends (13) of the support (2) each lie against an inner face of the respective sill (9).

6. A vehicle body according to claim 5, **characterised in that** the foam (11) in the support (2) reaches as far as the front ends (13).

7. A vehicle body according to any of the preceding claims, **characterised in that** the at least one support (2) and/or the sills (9) are produced from a fibre-reinforced plastics material or from sheet metal in a monocoque construction.

8. A vehicle body according to any of the preceding claims, **characterised in that** the foam (11) and/or the moulded foam part (10) are produced from expanded polypropylene (EPP) or from polyurethane (PU).

9. A vehicle comprising a vehicle body (1) according to any of the preceding claims.

## Revendications

1. Carrosserie de véhicule (1), de préférence pour un véhicule automobile comprenant
- deux poutres de seuil (9) s'étendant dans la direction longitudinale (8) du véhicule,
- au moins une poutre (2) s'étendant dans la direction transversale (12) du véhicule entre les poutres de seuil (9), l'ensemble de la poutre (2) étant plus haut que la tôle de plancher (6) de la carrosserie (1) du véhicule et passe sous la banquette arrière, et dans la direction longitudinale (8) du véhicule, derrière la poutre (2) il y a une cuvette (5) pour recevoir la banquette arrière, et
- au moins une pièce de forme en mousse (10) rigidifiant la carrosserie (1), et se trouvant dans une structure latérale de la carrosserie (1) à la hauteur de la poutre (2),
- et en plus de la pièce de forme en mousse (10), une partie de la poutre de seuil (9) et une partie de la poutre (2) sont remplies avec de la mousse durcie (11), et les parties avec la mousse (11) et la pièce de forme en mousse (10) sont alignées dans la direction transversale (12) du véhicule.

2. Carrosserie de véhicule (1), de préférence pour un véhicule automobile comprenant :
- deux poutres de seuil (9) s'étendant dans la direction longitudinale (8) du véhicule,
- au moins une poutre (2) s'étendant dans la direction transversale (12) du véhicule entre les poutres de seuil (9), l'ensemble de la poutre (2) étant plus haut que la tôle de plancher (6) de la carrosserie (1) du véhicule et passe sous la banquette arrière, et dans la direction longitudinale (8) du véhicule, derrière la poutre (2) il y a une cuvette (5) pour recevoir la banquette arrière, et
- au moins une pièce de forme en mousse (10) rigidifiant la carrosserie (1), et se trouvant dans une structure latérale de la carrosserie (1) à la hauteur de la poutre (2),
au moins l'une des poudres de seuil (9) a plusieurs profilés, les profilés étant remplis à hauteur de la poutre (2) au moins partiellement avec de la mousse durcie (11) et la poutre (2) formant un profilé étant au moins partiellement remplie avec de la mousse durcie (11).

3. Carrosserie de véhicule selon l'une des revendications précédentes,
**caractérisée en ce que**
la poutre (2) est réalisée sous la forme de tôle à talon.

4. Carrosserie de véhicule selon l'une des revendications précédentes,
**caractérisée en ce qu'**
au moins une pièce de forme en mousse (10) est dans l'une des portières de la carrosserie (1).

5. Carrosserie de véhicule selon l'une des revendications précédentes,
**caractérisée en ce que**
les deux extrémités frontales (13) de la poutre (2) s'appliquent respectivement contre l'un des côtés intérieurs de la poutre de seuil (9) respective.

6. Carrosserie de véhicule selon la revendication 5,
**caractérisée en ce que**
la mousse (11) de la poutre (2) arrive jusqu'aux extrémités frontales (13).

7. Carrosserie de véhicule selon l'une des revendications précédentes,
**caractérisée en ce qu'**
au moins une poutre (2) et/ou les poutres de seuil (9) sont en matière plastique renforcée de fibres ou en construction de coque en tôle.

8. Carrosserie de véhicule selon l'une des revendications précédentes,
**caractérisée en ce que**
la mousse (11) et/ou la pièce moulée en mousse (10) est fabriquée en polypropylène expansé (EPP) ou en polyuréthane (PU),

9. Véhicule équipé d'une carrosserie (1) selon l'une quelconque des revendications précédentes.
